# EUROPEAN PATENT APPLICATION

(11) **EP 4 534 514 A1**
(43) Date of publication of application: **09.04.2025**
(21) Application number: 23202189.9
(22) Date of filing: 06.10.2023
(51) Int. Cl.: C05C 3/00, C05D 1/00, C05D 9/00, C05D 9/02, C05F 11/02, C05F 11/08

(54) **COMPLEX GREEN FERTILIZER COMPRISING MICROORGANISMS, ESSENTIAL MINERALS, AND TRACE ELEMENTS, ENCAPSULATED WITHIN ACTIVATED BLACK CARBON MICRO-STRUCTURES**

(71) Applicant: Sabic Agri-Nutrients Company, 31961 Jubail (SA)
(72) Inventor: MAMEDOV, Aghaddin, Sugar Land, TX, 77478 (US); AL-RABHI, Mohamed, Sugar Land, TX, 77478 (US)
(74) Representative: J A Kemp LLP

(57) **Abstract**

A fertilizer composition comprising nitrogen, potassium, sulfur, a carbon black that is acid modified and activated and a plurality of live microorganisms and methods for producing and using the same are disclosed.

## Description

### BACKGROUND

### A. Field of the invention

The invention generally concerns fertilizer compositions containing microbes and methods of making the same. In particular embodiments, the fertilizer composition comprises potassium, nitrogen, sulfur, , a carbon black that is acid modified and activated, and a plurality of live microorganisms.

### B. Description of related art

Soil nutrients, such as nitrogen, phosphorus, potassium, and sulfur, as well as trace elements such as iron, zinc, copper, and magnesium, are useful for achieving thriving agriculture and growth of plants. Upon repeated planting cycles, the quantity of these nutrients in the soil may be depleted, resulting in reduced plant growth and decreased production. To counter this effect, fertilizers have been developed to help replace the depleted vital nutrients. Single-nutrient fertilizers and multi-nutrient fertilizers, such as fertilizer blends, have been developed to meet the varied needs of crop production worldwide.

Soil does not comprise just nutrients, it also comprises mineral substances, organic matter, and microorganisms. The role and activities of microorganisms in the soil is important for nutrient uptake by plants (e.g., via the root system), as beneficial microorganisms in the soil can directly participate in formation of soil fertility, e.g., conversion of substances and energy in the soil, formation and decomposition of humus and/or other organic material, release and/or fixation of trace elements and/or nutrients, fixation of nitrogen, etc.

However, in a purely natural state, the quantity of beneficial microorganisms in the soil may decrease and/or be insufficient for the agricultural yields anticipated by modern agrarian methods. Therefore, similar to the replenishment of soil using fertilizers comprising nutrients, soil may also need to be replenished with beneficial microorganisms.

Currently, most supplemental microorganisms are delivered to the soil for end use either: (i) directly in their commercial form (e.g., as a solid and/or liquid form fertilizer), (ii) in solution with irrigation water, (iii) coated on seeds under ambient temperature conditions, or (iv) coated on fertilizers under ambient temperature conditions. These delivery methods are limited in scope and also limit the type of microorganisms that can be utilized. There exists a need in the field to be able to widen the scope of microorganisms used and/or widen the scope of microorganism delivery methods when utilized in combination with various fertilizers. Some fertilizers, especially those highly acidic or basic, can be harmful to microorganisms by contact. In addition, high temperatures associated with fertilizer creation can render most microorganisms inactive and/or inefficient.

### SUMMARY

A discovery has been made that provides a solution to at least some of the problems associated with production, characteristics of, and/or use of combination fertilizers comprising fertilizer and microorganisms. In particular, disclosed herein are microbe-enhanced fertilizers comprising nitrogen, potassium, sulfur, a carbon black that is acid modified and activated, and a plurality of live microorganisms. In some aspects, potassium and sulfur is provided by potassium sulfate (K₂SO₄). In some aspects, nitrogen and sulfur is provided by ammonium sulfate ((NH₄)₂SO₄). In some aspects, the composition further comprises phosphorous and/or micronutrients. The sources of the ingredients can include waste products and green sources. Non-limiting examples include use of calcium sulfate as a reactant when the calcium sulfate (CaSO₄) is from a waste source, such as from production of phosphoric acid (H₃PO₄), use of carbon black from a decomposition of methane refinery as a carbon black source for the production of acid modified and activated carbon black, use of carbon dioxide (CO₂) as a reactant when the carbon dioxide is from a waste source, and/or use of a slag, such as a metal production slag such as steelmaking calcium slag, as a source for micronutrients. Further the microbe-enhanced fertilizer composition enables delivery of stable microorganisms along with fertilizer, where the microorganism is needed and/or over time as the fertilizer degrades. Additionally, the microbe-enhanced fertilizer composition can have an increased microorganism and/or fertilizer shelf-life.

In some aspects, the fertilizer composition comprises or consists of potassium sulfate (K₂SO₄), ammonium sulfate ((NH₄)₂SO₄), a carbon black that is acid modified and activated, and a plurality of live microorganisms. In some aspects, the fertilizer composition further comprises phosphorous and/or micronutrients. In some aspects, the composition comprises phosphoric acid and/or phosphate modified carbon black. In some aspects, the composition comprises Ca, Mg, Mn, Si, AI, Fe, Cu, and/or Zn. In some aspects some or all of the Ca, Mg, Mn, Si, AI, Fe, Cu, and/or Zn is provided by a slag, such as a metal production slag such as steelmaking calcium slag.

The carbon black may, in some instances, be a product of decomposition of methane. In some aspects, the carbon black may be derived from a refinery process and/or a methane pyrolysis process. In some aspects, the carbon black may be derived from a natural gas and/or a shale gas. In some aspects, the acid modified and activated carbon black comprises a phosphoric acid, sulfuric acid, and/or nitric acid modified carbon black. In some aspects, the acid modified and activated carbon black is a phosphoric acid modified carbon black. In some aspects, carbon black that is acid modified and activated was activated by nitrogen gas purge. In some aspects, the carbon black that is acid modified and activated comprises graphite and/or does not comprise aromatic rings.

In some aspects, the fertilizer composition comprises one or more live microorganisms. In some aspects, the fertilizer composition comprises one or more live microorganism species. In some aspects, microorganisms comprise diazotrophic bacteria, Azospirillum species, Azotobacter species, *Frateuria aurantia,* Bacillus species, endophytes, nitrogen fixing microorganism, methylotrophs, comammox microorganism, phosphorus solubilizing microorganism, Nitrospira species, Methylobacterium species, pink pigmented facultative methylotrophs (PPFM-trophs), *Pseudomonas plecoglossicida,* and/or *Bacillus aryabhattai.*

In some aspects, the fertilizer composition further comprises one or more of ammonium hydroxide, carbon dioxide, ammonium carbonate, water, calcium sulfate, potassium hydroxide, potassium carbonate, phosphoric acid, and/or calcium carbonate.

In certain aspects, the fertilizer composition does not contain any one or more of compost, humic acid, Br, urea, ammonium nitrate, ammonium phosphate, diammonium phosphate, muriate of potash, magnesium carbonate, silicon, potassium nitrate, phosphate rock, lime, zeolite, hydrochloric acid, leopardite, calcium carbonate, torrefied organic waste comprising labile carbon, charcoal, and/or calcium cyanamide.

In some aspects, at least a portion of the plurality of live microorganisms in the fertilizer composition may be comprised in a coating of the fertilizer composition. In some aspects, any one of potassium sulfate (K₂SO₄), ammonium sulfate ((NH₄)₂SO₄), and/or acid modified and activated carbon black may be at least partially surrounded with the plurality of live microorganism. In some aspects, the plurality of live microorganism is at least partially surrounded by potassium sulfate (K₂SO₄), ammonium sulfate ((NH₄)₂SO₄), and/or acid modified and activated carbon black.

In certain aspects, the fertilizer composition contains at least any one of, at most any one of, equal to any one of, or between any two of 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, or 45 wt.% of the ammonium sulfate ((NH₄)₂SO₄), at least any one of, at most any one of, equal to any one of, or between any two of 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, or 65 wt.% of the potassium sulfate (K₂SO₄), at least any one of, at most any one of, equal to any one of, or between any two of 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, or 55 wt. % of the carbon black that is acid modified and activated, and/or at least any one of, at most any one of, equal to any one of, or between any two of 0.01, 0.03, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.05, 2.1, 2.15, 2.2, 2.25, 2.3, 2.35, 2.4, 2.45, or 2.5 wt. % of the plurality of live microorganism based on the total weight of the fertilizer composition. In certain aspects, the fertilizer composition further contains at least any one of, at most any one of, equal to any one of, or between any two of 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 34, 3.5, 3.6, 3.7, 3.8, 3.9, 4.0, 4.1, 4.2, 4.3, 4.4, 4.6, 4.7, 4.8, 4.9, 5.0, 5.1, 5.2, 5.3, 5.4, or 5.5 wt.% of the micronutrients based on the total weight of the fertilizer composition.

In some aspects, the fertilizer composition contains at least any one of, at most any one of, equal to any one of, or between any two of 10, 11, 12, 13, 14, 15, 16, 17, 18, 19, 20, 21, 22, 23, 24, or 25 wt. % of nitrogen, contains at least any one of, at most any one of, equal to any one of, or between any two of 3, 4, 5, 6, 7, or 8 wt. % sulfur, at least any one of, at most any one of, equal to any one of, or between any two of 5, 6, 7, 8, 9, 10, 11, 12, 13, 14, or 15 wt. % calcium, and/or at least any one of, at most any one of, equal to any one of, or between any two of 5, 6, 7, 8, 9, 10, 11, 12, 13, 14, or 15 wt.% carbon based on the total weight of the fertilizer composition. In some aspects, the fertilizer composition further contains at least any one of, at most any one of, equal to any one of, or between any two of 2, 3, 4, or 5 wt.% slag, such as a metal production slag such as steelmaking calcium slag, based on the total weight of the fertilizer composition. In some aspects, the fertilizer composition further contains at least any one of, at most any one of, equal to any one of, or between any two of 2, 3, 4, or 5 wt.% micronutrients based on the total weight of the fertilizer composition.

In some aspects, the fertilizer composition is a solid fertilizer. In some aspects, the fertilizer composition is a slurry. In some aspects, the fertilizer is a liquid. In some aspects, the fertilizer composition is capable of being, or is, blended with other fertilizers. In some aspects, the fertilizer composition is capable of being used in fertigation. In some aspects, the fertilizer composition is capable of being used in a foliar spray.

Certain aspects are directed to a method of producing the fertilizer composition described herein. The method may include steps (a), (b), and/or (c). In some aspects, step (a) may include contacting a carbon black with an acid and heat treating to produce an acid modified carbon black, and activating the acid modified carbon black. In some aspects, step (a) includes contacting a carbon black sourced from a methane pyrolysis process with an acid at a temperature above 400 °C to produce an acid modified carbon black, and contacting the acid modified carbon black with a nitrogen gas, to generate a carbon black that is acid modified and activated. In some instances, the acid in step (a) comprises phosphoric acid, sulfuric acid, and/or nitric acid. In some instances, the generated carbon black that is acid modified and activated product may comprises an acid (e.g. phosphoric acid). In some aspects, step (b) may include contacting the acid modified and activated carbon black with a nitrogen source, a potassium source, and/or a sulfur source to generate a first product. In some aspects, step (b) may include contacting the carbon black that is acid modified and activated with an ammonium sulfate (NH₄)₂SO₄) and potassium sulfate (K₂SO₄), to generate a first product. In some aspects, step (c) may include contacting the carbon black that is acid modified and activated and/or the first product with a plurality of live microorganisms to produce a fertilizer composition comprising nitrogen, potassium, and/or sulfur, the plurality of live microorganisms, and the carbon black that is acid modified and activated. In some instances, the plurality of live microorganisms contacts the first product at the same time, before, or after the first product is contacted with the carbon black that is acid modified and activated. In some instances, step (c) comprises contacting the first product with the carbon black that is acid modified and activated to form a mixture, then contacting the mixture with the plurality of live microorganisms and mixing or contacting by coating.

In some instances, method step (c) comprises at least partially coating the carbon black that is acid modified and activated or partially coating the first product with at least a portion of the live microorganisms. In some instances, the method further comprising contacting the first product and/or the carbon black that is acid modified and activated with a source of micronutrients before, during, and/or after step (c). In some instances, the source of micronutrients comprises a slag, such as a metal production slag such as steelmaking calcium slag. In some instances, the fertilizer composition is any of the fertilizer compositions described herein.

In some aspects, the ammonium sulfate (NH₄)₂SO₄) and/or potassium sulfate (K₂SO₄) were generated based on the following equations (1) to (5) or in a one pot synthesis step as in equation (6). In some aspects, CaCO₃ is separated from (NH₄)₂SO₄ in equation (3), from K₂SO₄ in equation (5), and/or from the other products of equation (5). In some aspects, the separation is carried out by filtration.

2NH₃ + 2H₂O → 2NH₄OH (1)

2NH₄OH + CO₂ → (NH₄)₂CO₃ + H₂O (2)

(NH₄)₂CO₃ + CaSO₄ → CaCO₃ + (NH₄)₂SO₄ (3)

2KOH + CO₂ → K₂CO₃ + H₂O (4)

K₂CO₃ + CaSO₄ → K₂SO₄ + CaCO₃ (5)

2CaSO₄ + 2NH₃ + 2CO₂ + 2KOH → (NH₄)₂SO₄ +K₂SO₄ +2CaCO₃ (6)

In certain instances, at least a portion of the carbon dioxide is derived from a waste source. In certain instances, at least a portion of the calcium sulfate (CaSO₄) is a waste gypsum. In certain instances, at least a portion of the waste gypsum can be a red gypsum, phosphogypsum, and/or flue gas gypsum. In some aspects, the carbon black is a waste product, such as a decomposition of methane refinery.

In some embodiments, methods of fertilizing are described. A method can include applying a fertilizer composition, and/or blended or compounded fertilizer composition described herein to a portion of a soil, a crop, water, or any combination of the soil, the water, and the crop. In some embodiments, the soil is at least partially or fully submerged under water (e.g., rice paddy crops) and the granules sink in the water to contact the soil.

Certain embodiments of the present invention are characterized through the following aspects.

Aspect 1 concerns a fertilizer composition comprising nitrogen, potassium, sulfur, a plurality of live microorganisms, and a carbon black that is acid modified and activated, wherein the source of carbon black that is acid modified and activated is a methane pyrolysis process.

Aspect 2 concerns the fertilizer composition of aspect 1, wherein at least a portion of the nitrogen, potassium, and/or sulfur is provided by potassium sulfate (K₂SO₄) and/or ammonium sulfate (NH₄)₂SO₄).

Aspect 3 concerns the fertilizer composition of any one of aspects 1 and 2, wherein the fertilizer composition further comprises phosphorous and/or micronutrients.

Aspect 4 concerns the fertilizer composition of any one of aspects 1 to 3, wherein the composition comprises phosphoric acid.

Aspect 5 concerns fertilizer composition of any one of aspects 1 to 4, wherein the carbon black that is acid modified and activated is a phosphoric acid, sulfuric acid, and/or nitric acid modified carbon black.

Aspect 6 concerns the fertilizer composition of aspect 5, wherein the carbon black that is acid modified and activated is a phosphoric acid modified carbon black.

Aspect 7 concerns the fertilizer composition of any one of aspects 1 to 6, wherein the carbon black that is acid modified and activated was activated by nitrogen gas.

Aspect 8 concerns the fertilizer composition of any one of aspects 1 to 7, wherein the composition comprises a slag, such as steelmaking calcium slag such as steelmaking calcium slag, such as a slag comprising Ca, Mg, Mn, Si, AI, Fe, Cu, and/or Zn.

Aspect 9 concerns the fertilizer composition of any one of aspects 1 to 8, wherein the fertilizer composition further comprises Ca, Mg, Mn, Si, AI, Fe, Cu, and/or Zn.

Aspect 10 concerns the fertilizer composition of any one of aspects 1 to 9, wherein the plurality of live microorganisms comprise a diazotrophic bacteria, *Azospirillum* species, *Azotobacter* species, *Frateuria aurantia, Bacillus* species, endophytes, nitrogen fixing microorganism, methylotrophs, comammox microorganism, phosphorus solubilizing microorganism, *Nitrospira* species, *Methylobacterium* species, pink pigmented facultative methylotrophs (PPFM-trophs), *Pseudomonas plecoglossicida,* and/or *Bacillus aryabhattai.*

Aspect 11 concerns the fertilizer composition of any one of aspects 1 to 10, where in the carbon black that is acid modified and activated is derived from a natural gas and/or a shale gas.

Aspect 12 concerns the fertilizer composition of any one of aspects 1 to 11, wherein at least a portion of the plurality of live microorganisms are comprised in a coating of the fertilizer composition.

Aspect 13 concerns the fertilizer composition of any one of aspects 1 to 12, wherein ammonium sulfate (NH₄)₂SO₄), potassium sulphate (K₂SO₄), and/or the carbon black that is acid modified and activated at least partially surrounds the plurality of live microorganisms.

Aspect 14 concerns the fertilizer composition of any one of aspects 1 to 13, further comprising calcium sulfate (CaSO₄), calcium carbonate (CaCO₃), potassium carbonate (K₂CO₃), ammonium carbonate (NH₄)₂CO₃), potassium hydroxide (KOH), and/or ammonium hydroxide (NH₄OH).

Aspect 15 concerns the fertilizer composition of any one of aspects 1 to 14, comprising 20 to 40 wt. % of ammonium sulfate (NH₄)₂SO₄), 40 to 60 wt. % of potassium sulphate (K₂SO₄), 20 to 50 wt. % of the carbon black that is acid modified and activated, and/or 0.05 to 2 wt. % of the plurality of live microorganisms, and optionally 2 to 5 wt. % of micronutrients, based on the total weight of the fertilizer composition.

Aspect 16 concerns the fertilizer composition of any one of aspects 1 to 15, comprising 10 to 25 wt. % nitrogen, 3 to 8 wt. % sulfur, 5 to 15 wt. % potassium, 5 to 15 wt. % carbon, 2 to 5 wt. % of micronutrients, and/or 0.05 to 0.5 wt. % of the plurality of live microorganism based on the total weight of the fertilizer composition.

Aspect 17 concerns fertilizer composition of any one of aspects 1 to 16, wherein the carbon black that is acid modified and activated comprises graphite and/or does not comprise aromatic rings.

Aspect 18 concerns a method of producing a fertilizer composition, the method comprising.
(a) contacting a carbon black sourced from a methane pyrolysis process with an acid at a temperature above 400 °C to produce an acid modified carbon black, and contacting the acid modified carbon black with a nitrogen gas, to generate a carbon black that is acid modified and activated;
(b) contacting the carbon black that is acid modified and activated with ammonium sulfate (NH₄)₂SO₄) and potassium sulfate (K₂SO₄), to generate a first product; and
(c) contacting the carbon black that is acid modified and activated and/or first product with a plurality of live microorganisms,
wherein the steps produce a fertilizer composition comprising nitrogen, potassium, sulfur, the plurality of live microorganisms, and the carbon black that is acid modified and activated.

Aspect 19 concerns the method of aspect 18, wherein the acid comprises phosphoric acid, sulfuric acid, and/or nitric acid.

Aspect 20 concerns the method of any one of aspects 18 and 19, further comprising contacting the first product and/or the carbon black that is acid modified and activated with a source of micronutrients before, during, and/or after step (c).

Aspect 21 concerns the method of aspect 20, wherein the source of micronutrients comprises a slag, such as a metal production slag such as steelmaking calcium slag.

Aspect 22 concerns the method of fertilizing, the method comprising applying the fertilizer composition of any one of aspects 1 to 17 to a soil, a crop, water, or any combination thereof.

The following includes definitions of various terms and phrases used throughout this specification.

The term "fertilizer" is defined as a material applied to soils or to plant tissues to supply one or more plant nutrients essential or beneficial to the growth of plants and/or stimulants or enhancers to increase or enhance plant growth. Non-limiting examples of fertilizers include materials having one or more of urea, ammonium nitrate, calcium ammonium nitrate, urea calcium sulfate adduct, one or more superphosphates, binary NP fertilizers, binary NK fertilizers, binary PK fertilizers, NPK fertilizers, molybdenum, zinc, copper, boron, cobalt, and/or iron. In some embodiments, fertilizers include agents that enhance plant growth and/or enhance the ability for a plant to receive the benefit of a fertilizer, such as, but not limited to biostimulants, urease inhibitors, and nitrification inhibitors.

The term "microbe" or "microorganism" can include bacteria, fungi, protists, and/or archaea.

The term "micronutrient" is defined as a chemical element or substance used in trace amounts for the normal growth and development of a plant. Non-limiting examples of micronutrients include B, Cu, Fe, Mn, Mo, Zn, Se, and Si or compounds thereof.

The term "steelmaking calcium slag" is defined as a by-products from iron and/or steel manufacturing, and may primarily comprise calcium, magnesium, and aluminum silicates in various combinations. Slag may be formed when limestone reacts with silicon dioxide and other impurities of iron ore at high temperatures.

The term "secondary nutrient" is defined as a chemical element or substance used in moderate amounts for plant growth and are less likely to limit crop growth in comparison to N, P, and K. Non-limiting examples of secondary nutrients include Ca, Mg, and S.

The term "organic agent" is defined as a substance that is produced by or part of an organism. Non-limiting examples of organic agents suitable for a fertilizer include neem oil, seaweed extract, bio-stimulants, char, biowaste, ashes from incineration of animal waste or animal tissues, and diatomaceous earth.

The term "granule" can include a solid material. A granule can have a variety of different shapes, non-limiting examples of which include a spherical, a puck, an oval, a rod, an oblong, or a random shape.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%," "vol.%," or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include"), or "containing" (and any form of containing, such as "contains" and "contain") are inclusive or open-ended and do not exclude additional, unrecited elements or method steps.

The microbe-enhanced fertilizer composition and methods of producing the microbe-enhanced fertilizer composition of the present invention can "comprise," "consist essentially of," or "consist of" particular ingredients, components, compositions, steps, etc. disclosed throughout the specification. With respect to the transitional phase "consisting essentially of," in one non-limiting aspect, a basic characteristic of the fertilizer of the present invention is the presence of a microorganism in or on a granulated fertilizer.

### BRIEF DESCRIPTION OF THE DRAWINGS

Advantages of the present invention may become apparent to those skilled in the art with the benefit of the following detailed description and upon reference to the accompanying drawings.
FIG. 1 depicts an exemplary microbe-enhanced fertilizer composition.
FIG. 2 depicts an exemplary microbe-enhanced fertilizer production method.

While the invention is susceptible to various modifications and alternative forms, specific embodiments thereof are shown by way of example in the drawings. The drawings may not be to scale.

### DETAILED DESCRIPTION

Disclosed herein, among other things, is a microbe-enhanced fertilizer and a method of producing a microbe-enhanced fertilizer. The sources of the ingredients can include waste products and green sources. The microbe-enhanced fertilizer composition enables delivery of microorganisms along with fertilizer, where the microorganism is needed and/or over time as the fertilizer degrades. Additionally, the microbe-enhanced fertilizer composition can have an increased microorganism and/or fertilizer shelf-life.

The methods and/or compositions of the current disclosure provide an economically efficient means to produce and/or utilize a stable and high quality microbe-enhanced fertilizer. These and other non-limiting aspects of the present invention are discussed in further detail in the following sections.

### A. Fertilizer Compositions

The fertilizer composition can comprise nitrogen, potassium, sulfur, a carbon black that is acid modified and activated, and a plurality of live microorganisms. In some aspects, potassium and sulfur is provided by potassium sulfate (K₂SO₄). In some aspects, nitrogen and sulfur is provided by ammonium sulfate (NH₄)₂SO₄). In sum aspects, the fertilizer composition can comprise 35 wt. % to 65 wt. % or at least any one of, at most any one of, equal to any one of, or between any two of 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, or 65 wt.% of the potassium sulfate (K₂SO₄) based on the total weight of the fertilizer composition. In some aspects, the composition can contain 15 wt. % to 45 wt. % or at least any one of, equal to any one of, or between any two of 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, or 45 wt.% of the ammonium sulfate based on the total weight of the fertilizer composition. In certain aspects, the fertilizer composition can contain 15 wt. % to 55 wt. %, or 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54 or 55 wt. % of the carbon black that is acid modified and activated based on the total weight of the fertilizer composition. In certain aspects, the fertilizer composition may contain 1.5 wt. % to 5.5 wt. %, or at least any one of, at most any one of, equal to any one of, or between any two of 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 34, 3.5, 3.6, 3.7, 3.8, 3.9, 4.0, 4.1, 4.2, 4.3, 4.4, 4.6, 4.7, 4.8, 4.9, 5.0, 5.1, 5.2, 5.3, 5.4, or 5.5 wt.% of the micronutrients based on the total weight of the fertilizer composition, In certain aspects, the fertilizer composition can contain 0.001 wt. % to 2.5 wt. %, or at least any one of, at most any one of, equal to any one of, or between any two of 0.001, 0.005, 0.01, 0.03, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, 0.95, 1, 1.05, 1.1, 1.15, 1.2, 1.25, 1.3, 1.35, 1.4, 1.45, 1.5, 1.55, 1.6, 1.65, 1.7, 1.75, 1.8, 1.85, 1.9, 1.95, 2, 2.05, 2.1, 2.15, 2.2, 2.25, 2.3, 2.35, 2.4, 2.45, or 2.5 wt. % of the plurality of live microorganism based on the total weight of the fertilizer composition based on the total weight of the composition.

In some aspects, the fertilizer composition may contain 10 to 25 wt. % of nitrogen or at least any one of, at most any one of, equal to any one of, or between any two of 10, 11, 12, 13, 14, 15, 16, 17, 18, 19, 20, 21, 22, 23, 24, or 25 wt. % of nitrogen based on the total weight of the fertilizer composition. In some aspects, the fertilizer composition may contain 3 to 8 wt. % or at least any one of, at most any one of, equal to any one of, or between any two of 3, 4, 5, 6, 7, or 8% of sulfur based on the total weight of the fertilizer composition. In some aspects, the fertilizer composition may contain 5 to 15 wt. % potassium or at least any one of, at most any one of, equal to any one of, or between any two of 5, 6, 7, 8, 9, 10, 11, 12, 13, 14, or 15 wt. % potassium based on the total weight of the fertilizer composition. In some aspects, the fertilizer composition may contain 5 to 15 wt. % of carbon or at least any one of, at most any one of, equal to any one of, or between any two of 5, 6, 7, 8, 9, 10, 11, 12, 13, 14, or 15 wt.% carbon based on the total weight of the fertilizer composition. In some aspects, the fertilizer composition may include a slag, such as a metal production slag, such as steelmaking calcium slag. In some aspects, the slag may comprise Ca, Mg, Mn, Si, AI, Fe, Cu, and/or Zn.

In some aspects, acid is used to modify the carbon black. In some aspects, the acid can be phosphoric acid, sulfuric acid, and/or nitric acid. In some aspects, the carbon black that is acid modified and activated is a phosphoric acid modified carbon black. In some aspects, carbon black that is acid modified and activated was activated by nitrogen gas purge. In some aspects, the carbon black that is acid modified and activated comprises graphite and/or does not comprise aromatic rings.

The calcium sulfate in the composition and/or used as a reactant to produce components of the composition can be obtained from waste gypsum. In some aspects, the waste gypsum is red gypsum, phosphogypsum, and/or flue gas gypsum. In some aspects, the phosphogypsum can be obtained from a phosphoric acid manufacturing process. In some aspects, the carbon dioxide in the composition and/or used as a reactant to produce components of the composition can be derived from a waste source, such as an industrial plant. In some aspects, the carbon black is derived from a waste source, such as a refinery process. In some aspects, the carbon black that is acid modified and activated is derived from a methane pyrolysis process. In some aspects, the carbon black that is acid modified and activated is derived from a natural gas and/or a shale gas In some aspects, the carbon black that is acid modified and activated is a porous carbon black. In some aspects, the composition does not contain or is substantially free of a compost, humic acid, Mg, Br, Fe, urea, ammonium nitrate, ammonium phosphate, diammonium phosphate, sulfate of ammonia, muriate of potash, potassium sulfate, magnesium carbonate, silicon, potassium nitrate, phosphate rock, lime, zeolite, hydrochloric acid, leopardite, torrefied organic waste comprising labile carbon, charcoal, urea, and/or calcium cyanamide. In some aspects the fertilizer composition further comprising calcium sulfate (CaSO₄), calcium carbonate (CaCO₃), potassium carbonate (K₂CO₃), ammonium carbonate (NH₄)₂CO₃), potassium hydroxide (KOH), and/or ammonium hydroxide (NH₄OH).

The fertilizer can be of any suitable shape or may be a liquid, powder, or slurry. Non-limiting shapes include spherical, cuboidal, cylindrical, puck shape, oval, and oblong shapes. In some aspects, the fertilizer can be of cylindrical shape with a circular, elliptical, ovular, triangular, square, rectangular, pentagonal, or hexagonal cross section, although cylindrical shaped fertilizers having a cross-section of other shapes can also be made. In some aspects, the fertilizer can have a dimension such as length, width, height and/or cross-sectional diameter between 0.5 mm to 5 mm or at least any one of, equal to any one of, or between any two of 0.5 mm, 1 mm, 1.5 mm, 2 mm, 2.5 mm, 3 mm, 3.5 mm, 4 mm, 4.5 mm, and 5 mm. In some particular aspects, the fertilizer can have a substantially spherical shape with an average diameter 1 mm to 5 mm or at least any one of, equal to any one of, or between any two of 0.5 mm, 1 mm, 1.5 mm, 2 mm, 2.5 mm, 3 mm, 3.5 mm, 4 mm, 4.5 mm, and 5 mm.

In some other aspects, the fertilizer contains a coating layer that can form a coating over at least a portion of an outer surface of the fertilizer granules/powder/particles. In some aspects, at least a portion of the microorganisms are comprised in a coating of the fertilizer composition. In some aspects, the potassium, nitrogen, sulfur, potassium sulfate (K₂SO₄), ammonium sulfate (NH₄)₂SO₄), carbon black that is acid modified and activated, and/or micronutrients are at least partially surrounded with the plurality of live microorganism. In some aspects, the plurality of live microorganism is at least partially surrounded by the potassium, nitrogen, sulfur, micronutrients, potassium sulfate (K₂SO₄), ammonium sulfate (NH₄)₂SO₄), and/or the carbon black that is acid modified and activated.

In some embodiments, a microorganism that can be included in a microbe-enhanced fertilizer can be a bacteria, archaea, fungi, or a protist. In some instances, the microorganism can include an endophyte, rhizosphere microbe, and/or phyllosphere microbe. In some embodiments, the microorganism can included more than one species of microorganism. In some embodiments, more than one species, genus, phylum, class, and/or kingdom can be represented in a group of microorganisms protected and/or included in a microbe-enhanced fertilizer. In some embodiments, a microorganism can be cultured and/or grown in a laboratory. In some embodiments, a microorganism can be obtained from a natural source. In some embodiments, a microorganism can be a spore/cyst forming microorganism. In some embodiments, a microorganism can be a spore/cyst forming bacteria.

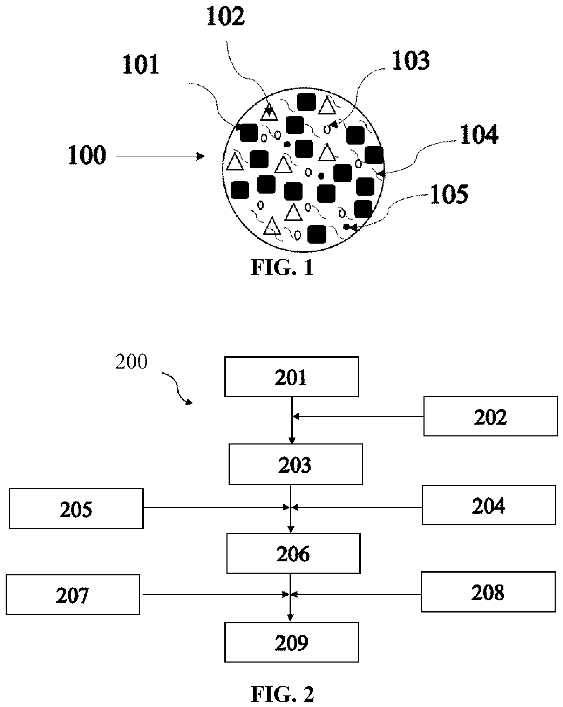

Referring to FIG. 1 a fertilizer granule 100 according to an example of the present invention is shown. The fertilizer granule (100) can contain a major portion of a combination of potassium, nitrogen, and sulfur source(s), such as potassium sulfate (101) and ammonium sulfate (102), and carbon black that is acid modified and activated (103), and a miner portion of a plurality of live microorganisms (104) and micronutrients (105). In Fig. 1, carbon black that is acid modified and activated, microorganisms, and micronutrients (103, 104, and 105) are uniformly distributed throughout the fertilizer granules. In some instances, the fertilizer granule is homogenous. In some instances, the fertilizer granule is not homogenous. In some instances, the fertilizer granule is coated with a coating. In some instances, the fertilizer granule is coated with a coating containing any one of or a combination of potassium sulfate, ammonium sulfate, carbon black that is acid modified and activated, micronutrients such those provided by a slag, and/or live microorganisms. In some instances, the fertilizer granules or the fertilizer compositions further comprise other fertilizers, micronutrients, primary nutrients, additional urea, additional nitrogen nutrients, insecticides, herbicides, or fungicides, or combinations thereof.

The fertilizer granules can have desirable physical properties such as desired levels of abrasion resistance, granule strength, pelletizability, hygroscopicity, granule shape, and size distribution, which are important properties for the fertilizer core.

The fertilizer granules described herein can be comprised in a composition useful for application to soil, water, and/or a crop. In addition to the fertilizer granules, the composition may include other fertilizer compounds, micronutrients, primary nutrients, additional urea, additional nitrogen nutrients, insecticides, herbicides, or fungicides, or combinations thereof.

The fertilizer granules described herein can also be included in a blended composition comprising other fertilizer granules. The other fertilizer granules can be granules of urea, monoammonium phosphate (MAP), diammonium phosphate (DAP), muriate of potash (MOP), monopotassium phosphate (MKP), triple super phosphate (TSP), rock phosphate, single super phosphate (SSP), ammonium sulfate, and the like.

### B. Microorganisms

In some embodiments, a microorganism that can be included in a microbe-enhanced fertilizer can be a bacteria, archaea, fungi, or a protist. In some instances, the microorganism can include an endophyte, rhizosphere microbe, and/or phyllosphere microbe. In some embodiments, the microorganism can included more than one species of microorganism. In some embodiments, more than one species, genus, phylum, class, and/or kingdom can be represented in a group of microorganisms protected and/or included in a microbe-enhanced fertilizer.

In some embodiments, a microorganism can be, but is not limited to, a diazotrophic bacteria, Azospirillum species, Azotobacter species, Frateuria aurantia, Bacillus species, endophytes, nitrogen fixing bacteria, methylotrophs, comammox (e.g., (COMplete AMMonia OXidation) an organism that can convert ammonia into nitrite and then into nitrate through the process of nitrification), phosphorus solubilizing, nitrite oxidizing, Nitrospira species, Methylobacterium species, pink pigmented facultative methylotrophs (PPFM-trophs), *Pseudomonas plecoglossicida,* and/or *Bacillus aryabhattai.*

In some embodiments, a microorganism can be cultured and/or grown in a laboratory prior to addition into the fertilizer. In some embodiments, a microorganism can be obtained from a natural source. In some embodiments, a microorganism can be concentrated prior to addition into the fertilizer.

In some embodiments, a microorganism can be a spore/cyst forming microorganism. In some embodiments, a microorganism can be a spore/cyst forming bacteria. In some embodiments, a microorganism can be induced to form spores/cysts prior to addition to the fertilizer. In some embodiments, a microorganism is not induced to form spores/cysts prior to and/or as part of a protection scheme. In some embodiments, a microorganism is not chemically induced to form spores/cysts prior to and/or as part of a protection scheme. In some embodiments, a protected microorganism has been selected for heat tolerance. In some embodiments, a protected microorganism as not been selected for heat tolerance.

In some embodiments, microorganisms can be cultured and/or concentrated to greater than, or equal to, approximately 10⁴-10¹³ cells per mL prior to addition to the fertilizer. In some embodiments, microorganisms can be cultured and/or concentrated to greater than, or equal to, approximately 10⁸-10⁹ cells per mL prior to addition to the fertilizer.

Prior to contacting with a fertilizer to obtain a microbe-enhanced fertilizer, microorganisms may be protected. In some embodiments, microorganism protection may comprise any one or more of encapsulation, physical protection, and/or engineering methods. In some embodiments, microorganism protection is by contact with a protectant. In some instances, microorganism protection is by encapsulation in a protectant. In some embodiments, a protected microorganism is protected by addition of one or more physical protectants, engineering methods, encapsulating agents, water-soluble additives, stabilizer additives, and/or dispersants.

In some embodiments, microorganism protection can comprise encapsulation with a stabilizer protectant. In some embodiments, a stabilizer comprises one or more of clay, diatomaceous earth, starch, agar, alginate, chitosan, PEG, PVA, -polyacrylic acid, ethanol, humic acid, humates, talc, clay, peat, lignite, vermiculite, perlite and/or chemically modified versions of the same.

In some embodiments, chemical modification of a stabilizer can comprise, but is not limited to, one or more of esterification, alkylation, acetylation, phosphorylation, hydrophobic modification, sulfation, sulfomethylation, methylation, amidation, amination, protonation, halogenation, nitration, copolymerization, and/or physical or covalent cross-linking.

In some embodiments, protection of a microorganism can also comprise addition of a water-soluble additive protectant. In some embodiments, a water soluble additive can be but is not limited to, glycerol, carboxy methyl cellulose (CMC), polyvinyl pyrrolidone (PVP), gum Arabic, guar gum, and/or mono and/or disaccharide based CMC/Arabic gum/guar gum.

In some embodiments, microorganism protection can comprise improved stickiness, stabilization, and surfactant and dispersal abilities. In some embodiments, such characteristics can be provided by protectants/inducers and nutrients (e.g. Alginates/Glycerol/polyvinyl alcohol, PEG/PVP, Clay/humate, Mono and disaccharides, CMC/Arabic gum/guar gum).

In some embodiments, protection can comprise inclusion of certain stabilizers and/or additives at set proportions, including but not limited to 1:0.05, 1:0.10, 1:0.15, 1:0.20, 1:0.25, 1:0.30, 1:0.35, 1:0.40, 1:0.45, 1:0.50, 1:0.55, 1:0.60, 1:0.65, 1:0.70, 1:0.75, 1:0.80, 1:0.85, 1:0.90, 1:0.95, 1:1, 1:1.05, 1:1.10, 1:1.15, 1:1.20, 1:1.25, 1:1.30, 1:1.35, 1:1.40, 1:1.45, 1:1.5, 1:1.55, 1:1.60, 1:1.65, 1:1.70, 1:1.75, 1:1.80, 1:1.85, 1:1.90, 1:1.95, 1:2, 1:3, 1:4, 1:5, 1:10, 1:20, 1:30, 1:40, 1:50, 1:60, 1:70, 1:80, 1:90, 1:100, 1:1,000, 1:10,000, 1:100,000, 1:1,000,000, or any range derivable therein.

In some embodiments, microorganisms can be cultured and/or concentrated to greater than, or equal to, approximately 10⁴-10¹³ cells per mL prior to addition to the fertilizer. In some embodiments, microorganisms can be cultured and/or concentrated to greater than, or equal to, approximately 10⁸-10⁹ cells per mL prior to addition to the fertilizer.

In some embodiments, physical protection and/or engineering methods facilitate pelleting and/or layering of microorganisms as a liquid solution at the core or around a core of a fertilizer granule. In some embodiments, a bolus of concentrated microbes in a liquid carrier are protected with a soluble additive, such as in a slurry.

In some embodiments, physical protection of microorganisms may comprise addition of protectants that are molecules and/or enzymes derived from thermophiles (e.g., heat tolerant bacteria), these molecules and/or enzymes may contribute to the thermo-protection phenotypes observed in thermophiles (see e.g., Pedro Lamosa et al., Thermostabilization of Proteins by Diglycerol Phosphate, a New Compatible Solute from Hyperthermophile Archaeoglobus fulgidus. Applied and Environmental Microbiology, Vol. 66, No. 5, 01 May 2000). Molecules and/or enzymes derived from thermophiles include proteins, lipids, saccharides, nucleic acids, small molecules, and/or inorganic compounds. Thermophiles may include bacteria, archaea, protists, and/or fungi. Thermophile microorganisms may include microorganisms that can thrive, divide, and/or survive at temperatures of 50 °C or greater. A non-limiting example of a thermophile is *Archaeoglobus fulgidus.*

In some embodiments, engineering methods for the protection of microorganisms may comprise spray drying and/or freeze-drying of the microorganisms. Freeze-drying can be performed by freezing the microorganisms or a composition containing the microorganisms, exposing the frozen microorganism or composition containing the microorganism to pressures below atmospheric pressures, and removing ice from or surrounding the frozen microorganism or composition. The composition containing the microorganism can contain, in some instances, a cryoprotectant, encapsulating agent, water-soluble additive, stabilizer additive, and/or a dispersant.

In some embodiments, a microorganism is contacted with a protectant using a spray, liquid stream, semi-solid, or solid (such as a powder) comprising said protectant. In some embodiments, a protectant is contacted with a microorganism using a spray, liquid stream, semi-solid, or solid (such as a powder) comprising said microorganism.

In some embodiments, a protected microorganism is concentrated (e.g., settlement, centrifugation, affinity capture, selective growth media, etc.,) prior to contact with a protectant and/or prior to protecting. In some embodiments, a protected microorganism is contacted with the protectant or with the fertilizer at a concentration of higher than 10¹² cells per gram of the protectant. In some embodiments, a protectant is comprised in a liquid, suspension, and/or dried powder.

In some embodiments, a protected microorganism can contain low amounts of moisture. In some embodiments, a free-moisture content of a protected microorganism can be less than 0.6 wt.%, less than 0.5 wt.% water or 0.25 wt.% to less than 0.6 wt.% water. In some instances, the free moisture content is 0.5, 0.4, 0.3, 0.2, 0.1, or 0 wt.%.

### C. Methods of Making Fertilizer Compositions

A method of producing the fertilizer composition comprising nitrogen, potassium, sulfur, potassium sulfate (K₂SO₄), ammonium sulfate (NH₄)₂SO₄), a carbon black that is acid modified and activated, and/or a plurality of live microorganisms is disclosed. In some aspects, the method comprises one or more of the following steps:
(a) contacting a carbon black with an acid and heat treating to produce an acid modified carbon black, and activating the acid modified carbon black. In some aspects, step (a) includes contacting a carbon black with an acid at a temperature above 400 °C to produce an acid modified carbon black, and contacting the acid modified carbon black with a nitrogen gas, to generate a carbon black that is acid modified and activated;
(b) contacting the acid modified and activated carbon black with a nitrogen source, a potassium source, and/or a sulfur source to generate a first product. In some aspects, step (b) includes contacting the carbon black that is acid modified and activated with ammonium sulfate (NH₄)₂SO₄) and potassium sulfate (K₂SO₄), to generate a first product; and
(c) contacting the carbon black that is acid modified and activated and/or first product with a plurality of live microorganisms,
wherein the steps produce a fertilizer composition comprising nitrogen, potassium, sulfur, the plurality of live microorganisms, and the carbon black that is acid modified and activated.

In step (a), the acid may be H₃PO₄, HNO₃, and/or H₂SO₄. In some aspects, the acid contacts the carbon black at higher temperatures. In some aspects, the acid modified carbon black is activated by a N₂ gas purge.

In some aspects, the acid contacted with the carbon black can contain 1 wt. % to 40 wt. % or at least any one of, equal to any one of, or between any two of 1 wt. %, 2 wt. %, 3 wt. %, 4 wt. %, 5 wt. %, 6 wt. %, 7 wt. %, 8 wt. %, 9 wt. %, 10 wt. %, 15 wt. %, 20 wt. %, 25 wt. %, 30 wt. %, 35 wt. %, and 40 wt. % of water. In some aspects, the source of carbon black is a methane pyrolysis process. In some aspects, the potassium sulfate and ammonium sulfate mixture slurry/granules, or gel can contain 10 wt. % to 40 wt. % or at least any one of, equal to any one of, or between any two of 10 wt. %, 15 wt. %, 20 wt. %, 25 wt. %, 30 wt. %, 35 wt. %, and 40 wt. % of water. In some aspects, the phosphoric acid, sulfuric acid, and/or nitric acid can be contacted at 400 °C to 900 °C, or at least any one of, equal to any one of, or between any two of 400 °C, 450 °C, 500 °C, 550 °C, 600 °C, 650 °C, 700 °C, 750 °C, 800 °C, 850 °C, and 900 °C. In certain aspects, acid modified carbon black pellets are activated by treatment with high flow of nitrogen at higher temperatures. In certain aspects, high flow of nitrogen can create sufficient pore size structure and change pore size distribution. In certain aspects, the ratio of acid (e.g., 85% concentration of phosphoric acid) to carbon black may vary within 1:1 and 3:1 or at least any one of, equal to any one of, or between any two of 1:1, 1.5:1, 2:1, 2.5:1, and 3:1 of acid to carbon black. In certain aspects, the carbon black that is acid modified and activated can be dried at 35 °C, 40 °C, 45 °C, 50 °C, 55 °C, 60 °C, 65 °C, 70 °C, 75 °C, 80 °C, 85 °C, 90 °C, 95 °C, 100 °C or greater, or any temperature or range thereof or there between to form a dried mixture. The amount of water, e.g., moisture, in the dried mixture can be less than 0.6 wt.%, 0.5 wt.%, 0.4 wt.%, 0.3 wt.%, 0.2 wt.%, 0.1 wt.%, or less, or any amount or range thereof or there between.

In step (b), the nitrogen, potassium, and sulfur source(s), such as ammonium sulfate (NH₄)₂SO₄) and/or potassium sulfate (K₂SO₄), can contact the carbon black that is acid modified and activated formed in step (a) to form a first product. In some instances, the first product comprises ammonium sulfate (NH₄)₂SO₄), potassium sulfate (K₂SO₄), and/or carbon black that is acid modified and activated. In some instances, the first product also comprises an acid, such as H₃PO₄. In some instances, the first product further comprises an acid (e.g., H₃PO₄) that is incorporated in the carbon black that is acid modified and activated which is generated in step (a). In some instances, the first product is dried at 35 °C, 40 °C, 45 °C, 50 °C, 55 °C, 60 °C, 65 °C, 70 °C, 75 °C, 80 °C, 85 °C, 90 °C, 95 °C, 100 °C or greater, or any temperature or range thereof or there between. In some instances, the first product is dried for 2, 3, 4, 5, 6, 7, 8, 9, 10, 11, 12, 13, 14, 15, 16, 17, 18, 19, 20, 21, 22, 23, 24, or 25 hours or more.

In certain aspects, the ammonium sulfate (NH₄)₂SO₄) and/or potassium sulfate (K₂SO₄) mineral components are generated based on the following equations (1) to (5) or in a one pot synthesis step as in equation (6). Separation of CaCO₃ crystals from (NH₄)₂SO₄ in equation (3), from K₂SO₄ in equation (5), and/or from the other products in equation (6) can be performed, such as by filtration.

2NH₃ + 2H₂O → 2NH₄OH (1)

2NH₄OH + CO₂ → (NH₄)₂CO₃ + H₂O (2)

(NH₄)₂CO₃ + CaSO₄ → CaCO₃ + (NH₄)₂SO₄ (3)

2KOH + CO₂ → K₂CO₃ + H₂O (4)

K₂CO₃ + CaSO₄ → K₂SO₄ + CaCO₃ (5)

2CaSO₄ + 2NH₃ + 2CO₂ + 2KOH → (NH₄)₂SO₄ +K₂SO₄ +2CaCO₃ (6)

In certain aspects, the first product forms particles, granules, or a gel, or any combination thereof.

In step (c), the first product may be contacted with the plurality of live microorganisms and mixed or contacted by coating to form a fertilizer. The fertilizer may then be pelletized, such as a pellet with a size of 2 x 3 mm. The pellets may be dried at 65 °C to 95 °C, or at least any one of, equal to any one of, or between any two of 65, 70, 75, 80, 85, 90, and 95 °C for a period of time, such as 24 hours.

In some instances, step (c) further comprises contacting the first product with the micronutrients to form a mixture, then contacting the mixture with the plurality of live microorganisms and mixing or contact by coating. The pellets formed in this method may comprise at least a partial coating of live microorganisms on the first product or on the first product and micronutrients or a homogenous mixture of the components, such as is represented in FIG. 1.

FIG. 2 shows a flow chart of a method 200 for making a fertilizer granule according to one example of the present invention. Referring to FIG. 2, a carbon black 201 can be contacted with phosphoric acid and nitrogen gas purge 202 at higher temperatures to form a carbon black that is acid modified by the phosphoric acid and activated 203. The acid modified and activated carbon black 203 can be contacted with an ammonium sulfate (NH₄)₂SO₄) 204 and/or potassium sulfate (K₂SO₄) 205 to generated a first product 206 comprising ammonium sulfate, potassium sulfate, and carbon black that is acid modified and activated. The first product 206 can be coated with a plurality of live microorganisms 207 to form a final fertilizer granule 209. In some embodiments, the first product 206 can be contacted with micronutrients 208, prior to, after, or during the contacting of the first product 206 with the plurality of live microorganisms 207.

In some embodiments, microbe-enhanced fertilizers of the present disclosure comprise any granulatable fertilizer (e.g., granular fertilizer). In some embodiments, a microbe-enhanced fertilizer comprises or excludes one or more granular fertilizers, preferably but not limited to, one or more of urea, single super phosphate (SSP), triple super phosphate (TSP), ammonium sulfate, monoammonium phosphate (MAP), diammonium phosphate (DAP), muriate of potash (MOP), sulfate of potash (SOP), potassium sulfate, binary NP fertilizers, binary NK fertilizers, binary PK fertilizers, and/or a nitrogen phosphorus potassium (NPK) mix.

In some embodiments, fertilizer granulation comprises chemically reacting reactants to form the fertilizer. In some embodiments, the fertilizer is formed from or is provided in a solution. In some embodiments, the fertilizer is formed or is provided in a fertilizer melt. The fertilizer melt can be formed, in some instances by evaporating a fertilizer solution. In some instances, the fertilizer is formed from or is provided in a solidified fertilizer. The solidified fertilizer can be formed, in some instances by cooling a fertilizer melt. In some instances, the fertilizer is formed from or is provided in a granulated fertilizer. The granulated fertilizer can be formed, in some instances by granulating the solidified fertilizer melt or a cooling fertilizer melt.

As described herein, in some embodiments, a microbe-enhanced fertilizer is produced when a microorganism is contacted with the fertilizer before or during granulation.

In some embodiments, a fertilizer dryer can be heated by steam, such as in a steam jacketed dryer. In some embodiments, a fertilizer dryer can be or can be part of a rotating dryer. In some embodiments, a granulator can be separate from a dryer. In some embodiments, a dryer and granulator can be the same vessel or part of a same vessel. In some embodiments, a granulator, may include a rotatable section, a rotatable internal container, and/or a section that vibrates. In some embodiments, the rotatable section and/or rotatable internal container may contain internal flights and/or be rotated to induce movement of a fertilizer composition in the granulator. In some embodiments, a granulator can be or can be part of a granulation drum, pugmill, pan granulator, etc.

In some embodiments, water or an aqueous solution, such as steam and/or a scrubber solution, can be combined with a fertilizer composition in granulator to facilitate granulation of a fertilizer composition.

In some embodiments, a microorganism or a protected microorganism is contacted with a fertilizer by spraying onto a fertilizer particle and/or granule, by mixing into a fertilizer, by spraying a fertilizer onto the microorganism, by coating a fertilizer, by being coated by a fertilizer, by being encapsulated in a fertilizer matrix, by encapsulating a fertilizer to form a matrix of the microorganism, etc.

In some embodiments, a microorganism or a protected microorganism is contacted with a fertilizer using a spray, liquid stream, semi-solid, or solid (such as a powder) comprising said microorganism. In some embodiments, a microorganism is contacted with a fertilizer using a dosage pump or a spray head.

In some embodiments, a microorganism or a protected microorganism is concentrated (e.g., settlement, centrifugation, affinity capture, selective growth media, etc.,) prior to contact with a fertilizer to form a microbe-enhanced fertilizer. In some embodiments, the microorganism is contacted with the fertilizer at a concentration of 10⁴-10¹² cells per gram of the fertilizer. In some preferred embodiments, a microorganism or a protected microorganism is contacted with the fertilizer at a concentration of 10⁸-10⁹ cells per gram of the fertilizer. In some embodiments, a microorganism is comprised in a liquid, suspension, and/or dried powder.

In some embodiments, a microbe-enhanced fertilizer particle can have a crush strength of 1, 2, 3, 4, 5, 6, 7, 8, 9, 10 kgf/particle, or more, or any amount there between, preferably 2 kgf/particle to 5 kgf/particle.

In some embodiments, a microbe-enhanced fertilizer can contain a coating on the surface of one or more particles. In some instances, the coating can include nutrients for a plant, inhibitors of urea hydrolysis and/or nitrification, agents to slow or increase the rate of degradation of the granule and/or fertilizers, agents to repel moisture and/or provide a hydrophobic layer, agents that decrease or increase the reactivity of the granule and/or fertilizers, agents that provide additional benefits to plants, agents that increase the stability and/or crush strength of the granule and/or fertilizers, pH buffering agents, drying agents, etc. or any combination thereof. The coating can be a commercially available coating, an oil, a fertilizer, a micronutrient, talc, a seaweed and/or seaweed extract, a wax, etc. In some instances, the coating can contain surfactants. In some instances, the coating contains a wax, surfactants, and/or an amine-based compound.

### D. Methods of Using Microbe-enhanced Fertilizers

In some embodiments, microbe-enhanced fertilizer compositions of the present disclosure can be used in methods of increasing the amount of one or more nutrients and one or more microorganisms in soil, and of enhancing plant growth. In some embodiments, methods can include applying to the soil an effective amount of a composition microbe-enhanced fertilizers of the present disclosure. In some embodiments, methods may include increasing the growth and yield of crops, trees, ornamentals, etc. such as, for example, palm, coconut, rice, wheat, corn, barley, oats, and soybeans. In some embodiments, methods can include applying microbe-enhanced fertilizer of the present disclosure to at least one of a soil, an organism, a liquid carrier, a liquid solvent, etc. (e.g., a target substrate).

In some embodiments, a microbe-enhanced fertilizer can be stored. In some embodiments, the microbe-enhanced fertilizer can be stored for any amount of time, such as 1 minute, 10 minutes, 30 minutes, 1 hour, 2 hours, 4 hours, 8 hours, 12 hours, 16 hours, 1 day, 2 days, 5 days, 1 week, 2 weeks, 3 weeks, 4 weeks, 1 month, 2 months, 3 months, 4 months, 5 months, 6 months, 1 year, 2 years, 3 years, 4 years, 5 years or more, or any amount of time or range thereof or there between without 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 % of the microorganisms in the micro-enhanced fertilizer dying. In some embodiments, the microorganisms and/or fertilizer components of the microbe-enhanced fertilizer composition have an extended shelf life relative to microbe-enhanced fertilizers created through traditional methods.

In some embodiments, once a microbe-enhanced fertilizer is applied to a target substrate, microorganism protection materials degrade under field conditions and release the protected microorganisms to deliver their bio-effects.

Non-limiting examples of plants that can benefit from the microbe-enhanced fertilizer of the present invention include vines, trees, shrubs, stalked plants, ferns, etc. The plants may include orchard crops, vines, ornamental plants, food crops, timber, and harvested plants. The plants may include Gymnosperms, Angiosperms, and/or Pteridophytes. The Gymnosperms may include plants from the Araucariaceae, Cupressaceae, Pinaceae, Podocarpaceae, Sciadopitaceae, Taxaceae, Cycadaceae, and Ginkgoaceae families. The Angiosperms may include plants from the Aceraceae, Agavaceae, Anacardiaceae, Annonaceae, Apocynaceae, Aquifoliaceae, Araliaceae, Arecaceae, Asphodelaceae, Asteraceae, Berberidaceae, Betulaceae, Bignoniaceae, Bombacaceae, Boraginaceae, Burseraceae, Buxaceae, Canellaceae, Cannabaceae, Capparidaceae, Caprifoliaceae, Caricaceae, Casuarinaceae, Celastraceae, Cercidiphyllaceae, Chrysobalanaceae, Clusiaceae, Combretaceae, Cornaceae, Cyrillaceae, Davidsoniaceae, Ebenaceae, Elaeagnaceae, Ericaceae, Euphorbiaceae, Fabaceae, Fagaceae, Grossulariaceae, Hamamelidaceae, Hippocastanaceae, Illiciaceae, Juglandaceae, Lauraceae, Lecythidaceae, Lythraceae, Magnoliaceae, Malpighiaceae, Malvaceae, Melastomataceae, Meliaceae, Moraceae, Moringaceae, Muntingiaceae, Myoporaceae, Myricaceae, Myrsinaceae, Myrtaceae, Nothofagaceae, Nyctaginaceae, Nyssaceae, Olacaceae, Oleaceae, Oxalidaceae, Pandanaceae, Papaveraceae, Phyllanthaceae, Pittosporaceae, Platanaceae, Poaceae, Polygonaceae, Proteaceae, Punicaceae, Rhamnaceae, Rhizophoraceae, Rosaceae, Rubiaceae, Rutaceae, Salicaceae, Sapindaceae, Sapotaceae, Simaroubaceae, Solanaceae, Staphyleaceae, Sterculiaceae, Strelitziaceae, Styracaceae, Surianaceae, Symplocaceae, Tamaricaceae, Theaceae, Theophrastaceae, Thymelaeaceae, Tiliaceae, Ulmaceae, Verbenaceae, and/or Vitaceae family.

In some embodiments, the effectiveness of compositions comprising microbe-enhanced fertilizers of the present invention can be ascertained by measuring the amount of particular nutrients in the soil at various times after applying the microbe-enhanced fertilizer composition to the soil. In some embodiments, the effectiveness of compositions comprising microbe-enhanced fertilizers of the present invention can be ascertained by measuring the amount of the microorganism in the soil at various times after applying the microbe-enhanced fertilizer composition to the soil. It is understood that different soils have different characteristics, which can affect the stability nutrients and microorganisms in the soil. In some embodiments, effectiveness of a microbe-enhanced fertilizer composition can be directly compared to other fertilizer compositions by doing a side-by-side comparison in the same soil under the same conditions.

In some embodiments, microbe-enhanced fertilizers according to the present disclosure can have a density that is greater than water. This can allow the granules and/or fertilizers to sink in water rather than float. This can be especially beneficial in instances where application is intended to a crop that is at least partially or fully submerged in water. A non-limiting example of such a crop is rice, as the ground in a rice paddy is typically submerged in water. Thus, application of microbe-enhanced fertilizers to such crops can be performed such that the granules and/or fertilizer are homogenously distributed on the ground that is submerged under water.

### EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results

### Example 1

### Production of Microbe-Enhanced Fertilizer

A microbe-enhanced fertilizer can be produced by the following method.

**Step a.** Treatment of carbon black with concentrated phosphoric acid at 500 °C followed by a high flow of nitrogen at high temperature can create a porous structured pellets of acid modified carbon black with an uniformly distributed pores called "carbon black that is acid modified and activated." The ratio of phosphoric acid (85% concentration) to carbon black may vary within 1:1 and 3:1.

**Step b.** (NH₄)₂SO₄ and K₂SO₄ can be produced through the reaction of calcium sulfate with ammonium carbonate and potassium hydroxide solution. The separation of CaCO₃ crystals from (NH₄)₂SO₄ and K₂SO₄ mixture can be carried out by filtration. The remaining solution can have (NH₄)₂SO₄/K₂SO₄ in a ratio of 2-3:1 and can be dried at 80 °C for 12 hours.

**Step c.** The carbon black that is acid modified and activated generated in step a can be combined with the other mineral ingredients generated in step b. In some instances steelmaking calcium slag comprising Ca, Mg, Mn, Si, AI, Fe, Cu, and/or Zn or other microelements can be added to the combination of the (NH₄)₂SO₄/K₂SO₄ and the carbon black that is acid modified and activated. The ratio of calcium slag to (NH₄)₂SO₄/K₂SO₄ can be within 0.1-0.25:1. The generated material can be further dried at 80 °C for 12 hours.

**Step d.** Microorganisms can be added to the material produced in steps c and/or b, and enriched material can be dried slowly at 40 °C for 4 hours.

The final product containing the following amount of nutrients: nitrogen 10 to 25 wt. %, sulfur 5 to 15 wt. %, potassium 5 to 15 wt. %, carbon 2 to 5 wt. %, and microorganisms 0.05 to 0.5 wt. % can be produced.

### Example 2

Ammonium sulfate and potassium sulfate generated from a calcium sulfate mineralization process were used for generating a (NH₄)₂SO₄/K₂SO₄ complex fertilizer.

First 150 g of ammonium sulfate powder at a temperature of 30 °C was dissolved in 600 ml water in a 1000 ml beaker and stirred for 15 min. 25 g potassium sulfate was added to the solution with stirring at 190 rpm. After 30 min the potassium sulfate was dissolved and 25 g of calcium carbonate powder was added to the solution with continuous stirring.

In another step, 70 g acid modified and activated carbon black was added to the above generated (NH₄)₂SO₄/K₂SO₄ mixture. The activated carbon black was generated by mixing 6 g carbon black powder with 14 g of phosphoric acid (85% acid concentration) with stirring, then drying at 30 °C for 24 hours. The phosphoric acid treated carbon black was then heated at 500 °C for 3 hours in nitrogen flow of 120 cc/min to activate the acid treated carbon black. The activated acid treated carbon black was then added to the fertilizer mixture gel ((NH₄)₂SO₄/K₂SO₄ mixture). 10 g calcium silicate slag containing microelements Ca, Mg, Si, AI, Fe, Zn was added to the gel. Other trace elements like Cu and Mn may also be added in this step. The gel and calcium slag was dried at 90 °C for 24 hours. At the final stage the dried material was mixed with 2.8 g of a powder containing microorganisms. The produced material was dry pelleted to produced particles with the size 2x2 mm.

## Claims

1. A fertilizer composition comprising nitrogen, potassium, sulfur, a plurality of live microorganisms, and a carbon black that is acid modified and activated, wherein the source of carbon black that is acid modified and activated is a methane pyrolysis process.

2. The fertilizer composition of claim 1, wherein at least a portion of the nitrogen, potassium, and/or sulfur is provided by potassium sulfate (K₂SO₄) and/or ammonium sulfate (NH₄)₂SO₄).

3. The fertilizer composition of any one of claims 1 and 2, wherein the fertilizer composition further comprises phosphorous and/or micronutrients.

4. The fertilizer composition of any one of claims 1 to 3, wherein the composition comprises phosphoric acid, calcium sulfate (CaSO₄), calcium carbonate (CaCO₃), potassium carbonate (K₂CO₃), ammonium carbonate (NH₄)₂CO₃), potassium hydroxide (KOH), and/or ammonium hydroxide (NH₄OH).

5. The fertilizer composition of any one of claims 1 to 4, wherein the carbon black that is acid modified and activated is a phosphoric acid, sulfuric acid, and/or nitric acid modified carbon black, preferably a phosphoric acid modified carbon black.

6. The fertilizer composition of any one of claims 1 to 5, wherein the carbon black that is acid modified and activated was activated by nitrogen gas.

7. The fertilizer composition of any one of claims 1 to 6, wherein the composition comprises Ca, Mg, Mn, Si, AI, Fe, Cu, and/or Zn, preferably in the form of a slag, such as a steelmaking calcium slag.

8. The fertilizer composition of any one of claims 1 to 7, wherein the plurality of live microorganisms comprise a diazotrophic bacteria, *Azospirillum* species, *Azotobacter* species, *Frateuria aurantia, Bacillus* species, endophytes, nitrogen fixing microorganism, methylotrophs, comammox microorganism, phosphorus solubilizing microorganism, *Nitrospira* species, *Methylobacterium* species, and/or pink pigmented facultative methylotrophs (PPFM-trophs).

9. The fertilizer composition of any one of claims 1 to 8, wherein:
the carbon black that is acid modified and activated is derived from a natural gas and/or a shale gas; and/or
the carbon black that is acid modified and activated comprises graphite and/or does not comprise aromatic rings.

10. The fertilizer composition of any one of claims 1 to 9, wherein:
at least a portion of the plurality of live microorganisms are comprised in a coating of the fertilizer composition; or
the ammonium sulfate (NH₄)₂SO₄), potassium sulphate (K₂SO₄), and/or the carbon black that is acid modified and activated at least partially surrounds the plurality of live microorganisms.

11. The fertilizer composition of any one of claims 1 to 10, comprising:
20 to 40 wt. % of ammonium sulfate (NH₄)₂SO₄), 40 to 60 wt. % of potassium sulphate (K₂SO₄), 20 to 50 wt. % of the carbon black that is acid modified and activated, and/or 2 to 5 wt. % of micronutrients, and optionally 0.05 to 2 wt. % of the plurality of live microorganisms, based on the total weight of the fertilizer composition; and/or
10 to 25 wt. % nitrogen, 3 to 8 wt. % sulfur, 5 to 15 wt. % potassium, 5 to 15 wt. % carbon, and/or 0.05 to 0.5 wt. % of the plurality of live microorganism, and optionally 2 to 5 wt. % of micronutrients, based on the total weight of the fertilizer composition.

12. A method of producing a fertilizer composition, the method comprising:
(a) contacting a carbon black sourced from a methane pyrolysis process with an acid at a temperature above 400 °C to produce an acid modified carbon black, and contacting the acid modified carbon black with a nitrogen gas, to generate a carbon black that is acid modified and activated;
(b) contacting the carbon black that is acid modified and activated with ammonium sulfate (NH₄)₂SO₄) and potassium sulfate (K₂SO₄), to generate a first product; and
(c) contacting the carbon black that is acid modified and activated and/or the first product with a plurality of live microorganisms to produce a fertilizer composition comprising nitrogen, potassium, sulfur, the plurality of live microorganisms, and the carbon black that is acid modified and activated.

13. The method of claim 12, wherein:
the acid comprises phosphoric acid, sulfuric acid, and/or nitric acid; and/or
the source of micronutrients comprises slag, such as steelmaking calcium slag.

14. The method of any one of claims 12 and 13, further comprising contacting the first product and/or the carbon black that is acid modified and activated with a source of micronutrients before, during, and/or after step (c).

15. A method of fertilizing, the method comprising applying the fertilizer composition of any one of claims 1 to 11 to a soil, a crop, water, or any combination thereof.
